# EUROPÄISCHE PATENTSCHRIFT

(11) **EP 3 061 627 B1**
(45) Veröffentlichungstag und Bekanntmachung des Hinweises auf die Patenterteilung: **30.08.2017**
(21) Anmeldenummer: 15197726.1
(22) Anmeldetag: 03.12.2015
(51) Int. Cl.: B60C 9/08, B60C 3/04, D07B 1/06, B60C 9/04

(54) **NUTZFAHRZEUGREIFEN MIT NIEDRIGER QUERSCHNITTSHÖHE**
COMMERCIAL VEHICLE TIRE WITH LOW CROSS-SECTION HEIGHT
PNEU DE VEHICULE UTILITAIRE A FAIBLE HAUTEUR DE SECTION

(30) Priorität: 27.02.2015 DE 102015203527
(43) Veröffentlichungstag der Anmeldung: 31.08.2016
(73) Patentinhaber: Continental Reifen Deutschland GmbH, 30165 Hannover (DE)
(72) Erfinder: Schramm, Joachim, 38112 Braunschweig (DE); Kramer, Thomas, 32049 Herford (DE); Fries, Volkmar, 31707 Bad Eilsen (DE); Brouwer, Frank, 30161 Hannover (DE); Oosterbaan, Martijn, 30161 Hannover (DE)
(74) Vertreter: Finger, Karsten

(56) Entgegenhaltungen:
- WO-A1-2013/150010
- DE-A1-102004 036 807
- DE-A1-102010 000 050

## Beschreibung

Die Erfindung betrifft einen Nutzfahrzeugreifen aufweisend zumindest eine Karkasslage, wobei die Karkasslage Festigkeitsträger aufweist, welche aus Stahlkorden der Konstruktion 1 + 18 aus einem Kernfilament und 18 dieses Kernfilament umhüllenden Filamenten in zwei Lagen bestehen, wobei die umhüllenden Filamente der zwei Lagen die gleiche Schlagrichtung und die gleiche Schlaglänge aufweisen, wobei der Durchmesser des Kernfilaments 0,18 mm bis 0,22 mm beträgt, wobei der Durchmesser der umhüllenden Filamente 0,17 mm bis 0,20 mm beträgt und wobei die Schlaglänge der umhüllenden Filamente höchstens 12,5 mm beträgt.

Ein Fahrzeugluftreifen radialer Bauart weist im Allgemeinen eine weitgehend luftundurchlässige Innenschicht, eine Festigkeitsträger enthaltende Radialkarkasse, die vom Zenitbereich des Reifens über die Seitenwände bis in die Wulstbereiche reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf.

In Nutzfahrzeugreifen verlaufen die Festigkeitsträger der meist einlagigen Karkasse meist in etwa in radialer Richtung. Die Festigkeitsträger einer Festigkeitsträgerlage der Karkasse müssen eine ausreichende Festigkeit aufweisen, um die im Betrieb des Reifens auftretenden Kräfte hinreichend aufnehmen zu können und dauerhaltbar zu sein. Insbesondere leistet die Karkasse Widerstand gegen den Innendruck des Reifens.

An die Festigkeitsträger der Karkasslagen werden hohe Anforderungen an die Festigkeit gestellt. Karkass-Festigkeitsträger sind dem Fachmann in Aufbau und Werkstoff in verschiedensten Ausführungen bekannt. Die Festigkeitsträger werden, beispielsweise durch Kalandrieren, in eine Kautschukmischung eingebettet, um als gummierte Karkasslage im Reifen eingesetzt werden zu können.

Bei einer Deformation eines Reifens, z.B. bei jeder Umdrehung des Reifens beim Durchlauf durch die Bodenaufstandsfläche, treten hohe mechanische Kräfte auf. Diese hohe mechanische Belastung durch zyklische Deformation eines Reifens im Betrieb zusammen mit der damit einhergehenden Walkarbeit und Wärmeentwicklung können zu Ermüdungserscheinungen der Festigkeitsträger der Karkasse führen, wodurch die Dauerhaltbarkeit des Reifens beeinträchtigt ist. Bekannt und üblich als Festigkeitsträger von Karkasslagen von Nutzfahrzeugreifen sind mehrlagige Stahlkorde, welche aus einem oder mehreren Kernfilamenten sowie aus einer oder mehreren diesen Kern umgebenden Lagen mit Lagenfilamenten gebildet sind.

Es wird in folgende Zugfestigkeitsklassen der Stahlfilamente unterschieden:

| | |
|---|---|
| UHT (Ultra-High-Tensile) | 3800 - 4100 N/mm² |
| SHT (Super-High-Tensile) | 3500 - 3800 N/mm² |
| HT (High-Tensile) | 3200 - 3500 N/mm² |
| NT (Normal-Tensile) | 2800 - 3200 N/mm². |

Aus der DE 10 2004 036 807 A1 sind Stahlkorde für Karkasslagen von Lastkraftwagen bekannt, deren Kernfilamente eine Zugfestigkeit im Normal-Tensile-Bereich aufweisen und die Lagenfilamente eine größere Zugfestigkeit aufweisen. Offenbart wird ein Stahlkord der Konstruktion 3 x 0,20 mm (NT) + 9 x 0,175 mm (HT).

Aus der DE 695 16 259 T2 ist ein Radialreifen für Lastwagen und Busse mit einer Reifengröße von 11/70R22.5 14PR, entsprechend einer Querschnittshöhe von in etwa 391 mm, bekannt, dessen Karkasse Stahlkorde der Konstruktion 1 x 0,185 mm + 6 x 0,17 mm + 12 x 0,17 mm aus HT - Stahlfilamenten aufweist, wobei sich die zwei auch in ihrer Schlaglänge unterscheiden.

Die DE 10 2010 000 050 A1 offenbart einen gattungsbildenden Stahlkord zur Verwendung als Festigkeitsträger der Karkasse von Lastkraftwagen der Konstruktion 1 x 0,20 mm (HT) + 18 x 0,175 mm (UHT) als Kompaktkord mit einer Schlaglänge von 10 mm. Ein solcher Stahlkord weist gute Festigkeitseigenschaften auf.
Eine besonders starke Beanspruchung durch zyklische Deformation erfahren die Festigkeitsträger der Karkasse im Bereich der Seitenwand im Fall besonderer Fahrbedingungen wie z.B. im Fall von einer Fahrt mit hoher Last und/oder einem auf der Felge montierten Reifen mit stark verringertem Luftdruck und/oder im Notlauf.
Die Entwicklung geht dahin, die Ladekapazität von Nutzfahrzeugen, beispielsweise durch erhöhte Last und / oder größere Ladehöhe, zu erhöhen.
Der Erfindung liegt die Aufgabe zugrunde, einen Reifen für ein Nutzfahrzeug zur Verfügung zu stellen, der eine größere Ladekapazität des Nutzfahrzeuges ermöglicht und sich durch eine gute Dauerhaltbarkeit, insbesondere im Fall einer Fahrt unter besonderen Bedingungen wie einer Fahrt mit hoher Last und/oder bei einer Fahrt mit einem auf der Felge montierten Reifen mit stark verringertem Luftdruck und/oder im Notlauf, auszeichnet.
Gelöst wird die gestellte Aufgabe erfindungsgemäß dadurch, dass der Nutzfahrzeugreifen eine Querschnittshöhe von maximal 170 mm aufweist und dass alle Stahlfilamente der Stahlkorde eine Zugfestigkeit zwischen 2800 N/mm² und 3200 N/mm² aufweisen.
Ein solcher Nutzfahrzeugreifen weist eine besonders geringe Querschnittshöhe auf. Hieraus ergibt sich eine besonders geringe Achshöhe für eine mit solchen Reifen bestückte Achse eines Nutzfahrzeuges. Bei gleichbleibender Gesamthöhe des Nutzfahrzeuges ist damit eine vergrößerte Ladehöhe und damit eine vergrößerte Volumen - Ladekapazität ermöglicht.

Die "Querschnittshöhe" ist ermittelt gemäß E.R.T.O. Standard. Sie ergibt sich für metrische Reifen (Metric tyres) aus dem Produkt aus nomineller Reifenbreite (Nominal Section Width) und nominellem Querschnittsverhältnis (Nominal Aspect Ratio), wobei das nominelle Querschnittsverhältnis dem Verhältnis Querschnittshöhe zu nomineller Reifenbreite mal 100 entspricht. Nominelle Reifenbreite und nominelles Querschnittsverhältnis sind üblicherweise auf der Oberfläche der Reifenseitenwand angegeben. Beispielsweise ergibt sich für einen Reifen der Spezifikation 315/45 R 22,5 aus der nominellen Reifenbreite von 315 mm und dem nominellen Querschnittsverhältnis von 45 eine Querschnittshöhe von in etwa 142 mm.

Im Fall einer Fahrt unter besonderen Bedingungen wie bei einer Fahrt mit hoher Last und/oder bei einer Fahrt mit einem auf der Felge montierten Reifen mit stark verringertem Luftdruck und/oder im Notlauf ist der Biegeradius der Karkass-Festigkeitsträger im Bereich der Seitenwand bei Nutzfahrzeugreifen mit einer Querschnittshöhe von so geringer Höhe von maximal 170 mm allerdings klein, insbesondere kleiner als bei Reifen mit einer größeren Querschnittshöhe.

Die genannten Stahlkorde der Konstruktion 1 + 18 mit einer Schlaglänge der umhüllenden Filamente von maximal 12,5 mm, wobei die 18 umhüllenden Filamente der zwei Lagen die gleiche Schlagrichtung und die gleiche Schlaglänge aufweisen (Kompaktkord), wodurch sich eine besonders dichte Packung ergibt, haben sich als besonders haltbare und ermüdungsbeständige Festigkeitsträger der Karkasse von Nutzfahrzeugreifen mit einer so geringen Querschnittshöhe von maximal 170 mm erwiesen. So zeigt eine Karkasslage mit solchen Stahlkorden eine erhöhte Haltbarkeit bezüglich Kordbrüchen in der Seitenwand unter Bedingungen, die einem Reifenlauf mit stark erniedrigtem Luftdruck entsprechen. Die NT - Stahlfilamente mit einer Zugfestigkeit zwischen 2800 N/mm² und 3200 N/mm² zeichnen sich dabei im Gegensatz zu Stahlfilamenten höherer Zugfestigkeitsklassen durch eine verbesserte Ermüdungsbeständigkeit aus. Es hat sich gezeigt, dass solche Korde eine besonders vorteilhafte Ermüdungsbeständigkeit gegenüber den mit einem kleinen Biegeradius einhergehenden zyklischen Deformation bei Fahrt unter besonderen Bedingungen auszeichnen, wodurch sie eine gute Dauerhaltbarkeit auch unter diesen besonderen Belastungen aufweisen.

Die genannten Vorteile haben sich insbesondere gezeigt, wenn ein oder mehrere Reifen einer Achse einen stark erniedrigten Luftdruck aufweist und/oder im Pannenlauf fährt.

Als besonders vorteilhaft hat sich die Kombination aus dem genannten Stahlkord als Karkass-Festigkeitsträger und einer Reifen-Querschnittshöhe von 133 mm bis 170 mm, bevorzugt von 142 mm, erwiesen.

Eine vorteilhafte Haltbarkeit der Karkasse im Bereich der niedrigen Seitenwand hat sich für Stahlkorde der Konstruktion 1 x 0,20 mm + 18 x 0,175 mm ergeben. Hierbei weist das Kernfilament einen Durchmesser von 0,20 mm auf, die 18 Lagenfilamente weisen einen Durchmesser von 0,175 mm auf.

Die Ermüdungsbeständigkeit, insbesondere bei Fahrt mit niedrigem Luftdruck und/oder im Notlauf, ist bei einer Schlaglänge von 8 mm bis 12,5 mm, bevorzugt von 10 mm, weiter verbessert.

Für die Dauerhaltbarkeit des Nutzfahrzeugreifens mit niedriger Querschnittshöhe ist es besonders vorteilhaft, wenn die Bruchkraft pro Stahlkord mindestens 1300 N, bevorzugt 1300 N, beträgt, gemessen gemäß ASTM D 2969.

Bei einem bevorzugten Ausführungsbeispiel handelt es sich um einen Reifen der Spezifikation 315/45 R 22.5.

In einem weiteren bevorzugten Ausführungsbeispiel handelt es sich um einen LKW-, oder Bus-Reifen.

Weitere Merkmale, Vorteile und Einzelheiten der Erfindung werden nun anhand der schematischen Zeichnungen, die Ausführungsbeispiele darstellen, näher erläutert. Dabei zeigt die
- Fig. 1: einen Querschnitt durch einen erfindungsgemäßen Nutzfahrzeugreifen,
- Fig. 2: einen Querschnitt durch einen Stahlkord der Konstruktion 1+18.

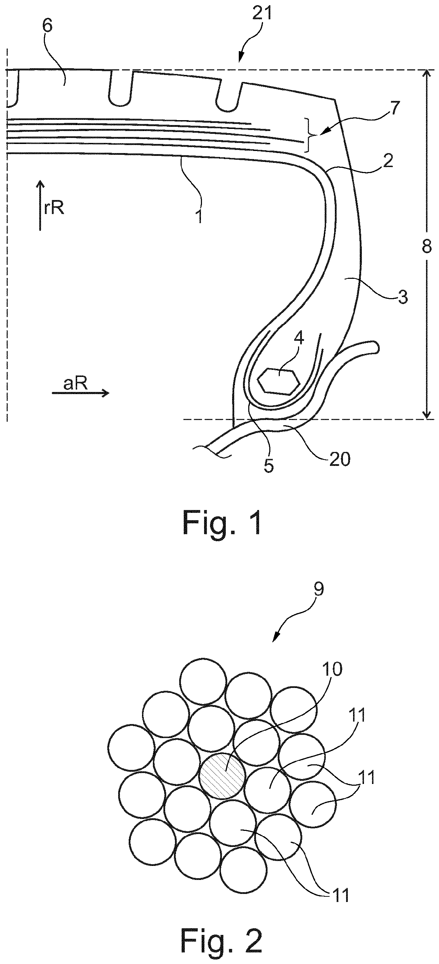

Fig. 1 zeigt schematisch einen Teilquerschnitt eines auf einer Felge 20 montierten erfindungsgemäßen Nutzfahrzeugreifens 21 mit einer weitgehend luftundurchlässigen Innenschicht 1, mit einer Festigkeitsträger enthaltenden Radialkarkasse mit einer Karkasslage 2, die vom Zenitbereich des Reifens 21 über die Seitenwände 3 bis in den Wulstbereich reicht und dort durch Umschlingen zugfester Wulstkerne 4 verankert ist, mit Wulstverstärkern 5, welche als weitere Verstärkungslage die Wulstkerne 4 umschlingen, mit einem radial außen befindlichen profilierten Laufstreifen 6 und mit einem zwischen dem Laufstreifen 6 und der Karkasslage 2 angeordneten Gürtelverband 7 mit vier Festigkeitsträgerlagen auf.

Der Nutzfahrzeugreifen 21 weist eine Querschnittshöhe 8 von maximal 170 mm auf. Es handelt sich beispielsweise um einen Reifen der Spezifikation 315/45 R 22.5, welcher eine nominelle Reifenbreite von 315 mm sowie ein Querschnittsverhältnis (Querschnittshöhe 8 zu nomineller Reifenbreite mal 100) von 45 aufweist, wodurch sich eine Querschnittshöhe 8 von in etwa 142 mm ergibt.

Die Festigkeitsträger der Karkasslage 2 sind innerhalb der Lage parallel zueinander angeordnet und in Kautschukmaterial eingebettet. Die Festigkeitsträger sind in etwa in radialer Richtung angeordnet und schließen einen Winkel von 80° bis 90° mit der Umfangsrichtung des Nutzfahrzeugreifens 21 ein. Die Festigkeitsträger der Karkasslage 2 sind wie in Fig. 2 gezeigt Stahlkorde 9 der Konstruktion 1 + 18 aus NT - Stahlfilamenten. Es handelt sich beispielsweise um einen LKW- oder um einen Bus-Reifen.

Fig. 2 zeigt einen Querschnitt durch einen Stahlkord 9 der Konstruktion 1 + 18 aus einem Kernfilament 10 und achtzehn dieses Kernfilament 10 umhüllenden Filamenten 11, welche um das Kernfilament 10 angeordnet sind, wobei die umhüllenden Filamente 11 in zwei Lagen angeordnet sind. Es handelt sich um einen Kompaktkord, d.h. alle umhüllenden Filamente 11 weisen die gleiche Schlagrichtung und die gleiche Schlaglänge auf. Der Durchmesser des Kernfilaments 10 beträgt 0,18 mm bis 0,22 mm. Sämtliche umhüllenden Filamente 11 weisen den gleichen Durchmesser auf. Der Durchmesser der umhüllenden Filamente 11 beträgt dabei 0,17 mm bis 0,20 mm und die Schlaglänge der umhüllenden Filamente 11 beträgt höchstens 12,5 mm. Alle Stahlfilamente sind NT-Stahlfilamente und weisen somit eine Zugfestigkeit zwischen 2800 N/mm² und 3200 N/mm² auf. Die Bruchkraft des Stahlkordes 9 beträgt mindestens 1300 N. Solche Stahlkorde eignen sich hervorragend als Festigkeitsträger der einen oder mehreren Karkasslagen 2 von Nutzfahrzeugreifen mit einer Querschnittshöhe 8 von maximal 170 mm, wie beispielsweise in Fig. 1 gezeigt.

Bevorzugt handelt es sich um einen Stahlkord 9 der Konstruktion 1 x 0,20 mm + 18 x 0,175 mm (NT) mit einer Schlaglänge von 10 mm.

### Bezugszeichenliste

### (Teil der Beschreibung)

- 1: Innenschicht
- 2: Karkasselage
- 3: Seitenwand
- 4: Wulstkern
- 5: Wulstverstärker
- 6: profilierter Laufstreifen
- 7: Gürtelverband
- 8: Querschnittshöhe
- 9: Stahlkord
- 10: Kernfilament
- 11: umhüllendes Filament
- 20: Felge
- 21: Nutzfahrzeugreifen

- rR: radiale Richtung
- aR: axiale Richtung

## Patentansprüche

1. Nutzfahrzeugreifen aufweisend zumindest eine Karkasslage (2), wobei die Karkasslage (2) Festigkeitsträger aufweist, welche aus
• Stahlkorden (9) der Konstruktion 1 + 18 aus einem Kernfilament (10) und 18 dieses Kernfilament (10) umhüllenden Filamenten (11) in zwei Lagen bestehen,
• wobei die umhüllenden Filamente (11) der zwei Lagen die gleiche Schlagrichtung und die gleiche Schlaglänge aufweisen,
• wobei der Durchmesser des Kernfilaments (10) 0,18 mm bis 0,22 mm beträgt,
• wobei der Durchmesser der umhüllenden Filamente (11) 0,17 mm bis 0,20 mm beträgt und
• wobei die Schlaglänge der umhüllenden Filamente (11) höchstens 12,5 mm beträgt,
**dadurch gekennzeichnet, dass**
• der Nutzfahrzeugreifen eine Querschnittshöhe (8) von maximal 170 mm aufweist und
• dass alle Stahlfilamente (10), (11) der Stahlkorde (9) eine Zugfestigkeit zwischen 2800 N/mm² und 3200 N/mm² aufweisen.

2. Nutzfahrzeugreifen nach Anspruch 1, **dadurch gekennzeichnet, dass** die Querschnittshöhe (8) 133 mm bis 170 mm, bevorzugt 142 mm, beträgt.

3. Nutzfahrzeugreifen nach Anspruch 1 oder 2, **dadurch gekennzeichnet, dass** die Stahlkorde (9) die Konstruktion 1 x 0,20 mm + 18 x 0,175 mm aufweisen.

4. Nutzfahrzeugreifen nach einem oder mehreren der vorangehenden Ansprüche, **dadurch gekennzeichnet, dass** die Schlaglänge 8 mm bis 12,5 mm, bevorzugt 10 mm, beträgt.

5. Nutzfahrzeugreifen nach einem oder mehreren der vorangehenden Ansprüche, **dadurch gekennzeichnet, dass** die Bruchkraft pro Stahlkord (9) mindestens 1300 N, bevorzugt 1300 N, beträgt, gemessen gemäß ASTM D 2969.

6. Nutzfahrzeugreifen nach einem oder mehreren der vorangehenden Ansprüche, **dadurch gekennzeichnet, dass** es sich um einen Reifen der Spezifikation 315/45 R 22.5 handelt.

7. Nutzfahrzeugreifen nach einem oder mehreren der vorangehenden Ansprüche, **dadurch gekennzeichnet, dass** es sich um einen LKW- oder Bus-Reifen handelt.

## Claims

1. Commercial vehicle tyre having at least one carcass ply (2), the carcass ply (2) having reinforcing elements which
• consist of steel cords (9) of the construction 1 + 18, comprising a core filament (10) and 18 filaments (11) enveloping this core filament (10), in two plies,
• the enveloping filaments (11) of the two plies having the same direction of lay and the same length of lay,
• the diameter of the core filament (10) being 0.18 mm to 0.22 mm,
• the diameter of the enveloping filaments (11) being 0.17 mm to 0.20 mm and
• the length of lay of the enveloping filaments (11) being at most 12.5 mm,
**characterized in that**
• the commercial vehicle tyre has a cross-sectional height (8) of as a maximum 170 mm and
• **in that** all the steel filaments (10), (11) of the steel cords (9) have a tensile strength of between 2800 N/mm² and 3200 N/mm².

2. Commercial vehicle tyre according to Claim 1, **characterized in that** the cross-sectional height (8) is 133 mm to 170 mm, preferably 142 mm.

3. Commercial vehicle tyre according to Claim 1 or 2, **characterized in that** the steel cords (9) have the construction 1 x 0.20 mm + 18 x 0.175 mm.

4. Commercial vehicle tyre according to one or more of the preceding claims, **characterized in that** the length of lay is 8 mm to 12.5 mm, preferably 10 mm.

5. Commercial vehicle tyre according to one or more of the preceding claims, **characterized in that** the breaking force per steel cord (9) is at least 1300 N, preferably 1300 N, measured according to ASTM D 2969.

6. Commercial vehicle tyre according to one or more of the preceding claims, **characterized in that** it is a tyre of the specification 315/45 R 22.5.

7. Commercial vehicle tyre according to one or more of the preceding claims, **characterized in that** it is a truck tyre or bus tyre.

## Revendications

1. Pneumatique de véhicule utilitaire présentant au moins une couche de carcasse (2), la couche de carcasse (2) comportant des supports de résistance :
- composées de câbles d'acier (9) de construction 1 + 18 réalisés à partir d'un filament de noyau (10) et de 18 filaments (11) enveloppant le filament de noyau (10) en deux couches ;
- les filaments (11) enveloppants des deux couches présentant la même direction de pas et la même longueur de pas ;
- le diamètre du filament de noyau (10) étant de 0,18 mm à 0,22 mm ;
- le diamètre des filaments (11) enveloppants étant de 0,17 mm à 0,20 mm ; et
- la longueur de pas des filaments (11) enveloppants étant de tout au plus 12,5 mm ;
**caractérisé en ce que** :
- le pneumatique de véhicule utilitaire présente une hauteur de section (8) de tout au plus 170 mm ; et
- tous les filaments en acier (10), (11) des câbles en acier (9) présentent une résistance à la traction comprise entre 2800 N/mm² et 3200 N/mm².

2. Pneumatique de véhicule utilitaire selon la revendication 1, **caractérisé en ce que** la hauteur de section (8) est de 133 mm à 170 mm, de façon préférée de 142 mm.

3. Pneumatique de véhicule utilitaire selon la revendication 1 ou 2, **caractérisé en ce que** le câble en acier (9) présente la construction 1 x 0,20 mm + 18 x 0,175 mm.

4. Pneumatique de véhicule utilitaire selon l'une quelconque des revendications précédentes ou plusieurs d'entre elles, **caractérisé en ce que** la longueur de pas est de 8 mm à 12,5 mm, de façon préférée de 10 mm.

5. Pneumatique de véhicule utilitaire selon l'une quelconque des revendications précédentes ou plusieurs d'entre elles, **caractérisé en ce que** l'effort de rupture par câble en acier (9) est au moins de 1300 N, de façon préférée de 1300 N, mesuré selon ASTM D 2969.

6. Pneumatique de véhicule utilitaire selon l'une quelconque des revendications précédentes ou plusieurs d'entre elles, **caractérisé en ce que** le pneumatique est un pneumatique de spécification 315/45 R 22.5.

7. Pneumatique de véhicule utilitaire selon l'une quelconque des revendications précédentes ou plusieurs d'entre elles, **caractérisé en ce que** le pneumatique est un pneumatique de poids lourd ou de bus.
